# EUROPÄISCHE PATENTANMELDUNG

(11) **EP 1 103 966 A1**
(43) Veröffentlichungstag der Anmeldung: **30.05.2001**
(21) Anmeldenummer: 00123597.7
(22) Anmeldetag: 28.10.2000
(51) Int. Cl.: G11B 20/10, G11B 19/02, G06F 1/32

(54) **Schaltungsanordnung und Betriebsverfahren für ein netzunabhängiges Gerät zur Wiedergabe und/oder Aufnahme mit langer Spieldauer**

(30) Priorität: 25.11.1999 DE 19956790
(71) Anmelder: Micronas GmbH, 79108 Freiburg (DE)
(72) Erfinder: Becher, Jürgen, Dipl.-Ing., 79312 Emmendingen (DE); Siefert, Gerald, Dipl.-Ing., 79108 Freiburg i.Br. (DE); Mijovic, Zoran, Dipl.-Ing., 79111 Freiburg (DE); Tölle, Magnus, Dipl.-Ing., 79108 Freiburg-Hochdorf (DE)
(74) Vertreter: Sauer, Wolfgang, Dipl.-Ing.

(57) **Zusammenfassung**

Eine Schaltungsanordung und ein zugehöriges Betriebsverfahren zur Erzielung einer langen Spieldauer für ein tragbares, netzunabhängiges Gerät, das Signale wiedergeben und/oder aufnehmen kann. Die Signale können vorwiegend aus dem Audio- oder Videobereich stammen, sind jedoch nicht auf diese beschränkt. Die Schaltungsanordnung enthält einen Miniatur-Massenspeicher (1), der über Datenverbindungen mit einem Zwischenspeicher (2) und einer Signalverarbeitungseinrichtung (3) verkoppelt ist, eine Stromversorgungseinheit (4), die an eine Stromquelle (5), beispielsweise eine Batterie oder ein Batteriesatz, anschließbar ist und mindestens eine geregelte Versorgungsspannung (u1, u2, u3; u1, u2, u5) zur Verfügung stellt, und schließlich eine Überwachungseinrichtung (6), die den Ladezustand des Zwischenspeichers (2) mittels Zustandssignalen (z1, z2) einer Steuereinrichtung (7) anzeigt. Die Steuereinrichtung (7) löst in Abhängigkeit von dem jeweiligen Zustandssignal (z1, z2) einen zeitweiligen Stromsparbetrieb, insbesondere beim Miniatur-Massenspeicher (2) aus, wobei die Grundfunktion der Schaltungsanordnung während der Dauer des Stromsparbetriebs über die im Zwischenspeicher (2) zwischengespeicherten Daten aufrechterhalten wird.

## Beschreibung

Die Erfindung betrifft eine Schaltungsanordnung und ein zugehöriges Betriebsverfahren für ein tragbares, netzunabhängiges Gerät zur Wiedergabe und/oder Aufnahme von Signalen, insbesondere von Audiosignalen, mit langer Spieldauer. Derartige Geräte des Konsumbereiches sind für die Wiedergabe von Audiosignalen beispielsweise unter der Bezeichung "Walkman" oder "Discman" weit verbreitet und enthalten neben einer Signalverarbeitungseinrichtung, einer Stromversorgungseinrichtung und einer Steuereinrichtung zur Speicherung der Information als Speicher in der Regel eine Bandkassette, eine CD (=Compact Disc) oder eine Mini-CD. Ein Nachteil dieser Speicher ist, daß sie alle ziemlich groß sind und dadurch die Mindestgerätegröße festlegen. Ein weiterer Nachteil ist, daß bei diesen Speichern bewegliche Speichermedien verwendet werden, weil diese trotz eines geregelten Bewegungsantriebes gegenüber Rotationsbewegungen, die beim Tragen und Bewegen zwangsläufig auftreten, empfindlich sind und Frequenzschwankungen der analog gespeicherten Signale verursachen können. Zudem erfordern diese Speicher einen mechanischen Antrieb, der relativ viel Leistung verbraucht und somit große Batterien zur Energieversorgung bedingt. Dies treibt alles die Gehäuseabmessungen des Gerätes in die Höhe. Eine gewisse Abhilfe bringt die Digitalisierung und die Verwendung von leistungsfähigen Festspeichern zur Speicherung der Information mittels Daten. Die zunehmenden Speicherkapazitäten, aktuelle Datenkomprimierungsverfahren und der Wegfall eines relativ großen mechanischen Antriebes ermöglichen dabei kleinere Gehäuse, wenn auch die Spieldauer im Vergleich zu den altbekannten Geräten mit Bandkassette oder CD relativ gering ist. Eine weitere Anwendung für derartige Schaltungsanordnungen und zugehörige Betriebsverfahren ergibt sich, wenn Videosignale wiederzugeben oder zu speichern sind, eventuell auch noch in Verbindung mit Audiosignalen. Bei der Verarbeitung von digitalisierten Videosignalen, beispielsweise in der Art einer Stand- oder Bewegtbild-Aufnahmeeinrichtung mit digitaler Bildaufzeichnung und anschließender Bildwiedergabe, treten schon bei Standbildern noch höhere Datenmengen auf als bei Audiosignalen, so daß die Forderung, leistungsfähige Massenspeicher einzusetzen und die Stromaufnahme der Gesamtanordnung in erträglichen Grenzen zu halten, hier noch dringender ist.

Die Entwicklung bei Massenspeichern zielt wie bereits erwähnt in Richtung einer Verkleinerung des für den Speicher aufzuwendenden Gehäusevolumens, bei gleichzeitiger Erhöhung der Speicherkapazität. Neben diesen beiden Punkten tritt die Stromaufnahme der Massenspeicher beim Lesen und Schreiben etwas in den Hintergrund, weil das für den üblichen netzabhängigen Betrieb nicht so wichtig ist. Bei tragbaren Geräten ist dieser Punkt jedoch zu beachten, weil davon das erforderliche Batterievolumen abhängig ist. Im folgenden werden alle miniaturisierten Massenspeicher unabhängig von ihrer Bauart als Miniatur-Massenspeicher bezeichnet. Beispielsweise sind miniaturisierte Massenspeicher für Daten bekannt geworden, die ähnlich wie die Festplattenspeicher in persönlichen Computern (=PC) aufgebaut sind, nur eben sehr viel kleiner, wobei die Stromaufnahme jedoch noch relativ hoch ist. Durch die kleine Bauform und die relativ hohe Umdrehungsgeschwindigkeit erweisen sich derartige Miniatur-Festplattenspeicher im Betrieb bei tragbaren Geräten jedoch als sehr bewegungsunabhängig.

Es ist Aufgabe der Erfindung für ein tragbares, netzunabhängiges Gerät zur Wiedergabe und/oder Aufnahme eine Schaltungsanordnung und ein zugehöriges Betriebsverfahren anzugeben, das trotz einer relativ kleinen Stromquelle, beispielsweise ein im Gerät vorhandener Batteriesatz aus einer oder mehreren Batterien, eine lange Spieldauer ermöglicht.

Die Lösung der Aufgabe wird nach den Merkmalen der unabhängigen Ansprüche 1 und 11 dadurch erreicht, daß zur Erzielung einer langen Spieldauer ein miniaturisierter Massenspeicher verwendet wird, der einen schnellen Datentransfer beim Lesen und Schreiben ermöglicht. Letztere Eigenschaft wird in Verbindung mit einem puffernden Zwischenspeicher zu einem intermittierenden Betrieb ausgenutzt. Durch den intermittierenden Betrieb werden ausreichend lange Intervalle zur Verfügung gestellt, in denen mindestens der Miniatur-Massenspeicher in einen Stromsparbetrieb überführt ist. Im zeitlichen Mittel läßt sich auf diese Weise die Gesamtstromaufnahme deutlich reduzieren. Der Stromsparbetrieb des Miniatur-Massenspeichers kann solange beibehalten werden, bis der Belegungszustand des Zwischenspeichers rechtzeitig wieder einen raschen Datentransfer erforderlich macht, damit der kontinuierliche Datenstrom zur oder von der Signalverarbeitungseinrichtung nicht unterbrochen wird. Der kontinuierliche Datenstrom zur oder von der Signalverarbeitungseinrichtung entspricht dabei einer stets durchzuführenden Grundfunktion, die durch den intermittierenden Betrieb nicht gestört werden darf. Der Belegungszustand des Zwischenspeichers wird mittels einer Überwachungseinrichtung überwacht, die den Belegungszustand der Steuereinrichtung signalisiert.

Die Erfindung und vorteilhafte Ausgestaltungen werden nun anhand der Figuren der Zeichnung näher erläutert, wobei die Figuren 1 bis 4 ein erstes und die Figuren 5 bis 8 ein zweites Ausführungsbeispiel als Blockschaltbild in verschiedenen Betriebszuständen zeigen:
- Fig. 1: Wiedergabebetrieb mit raschem Datentransfer - erster Betriebsmodus,
- Fig. 2: Aufnahmebetrieb mit raschem Datentransfer - erster Betriebsmodus,
- Fig. 3: Wiedergabebetrieb mit Stromsparmodus - zweiter Betriebsmodus,
- Fig. 4: Aufnahmebetrieb mit Stromsparmodus - zweiter Betriebsmodus,
- Fig. 5: Wiedergabebetrieb mit raschem Datentransfer - erster Betriebsmodus,
- Fig. 6: Aufnahmebetrieb mit raschem Datentransfer - erster Betriebsmodus,
- Fig. 7: Wiedergabebetrieb mit Stromsparmodus - zweiter Betriebsmodus und
- Fig. 8: Aufnahmebetrieb mit Stromsparmodus - zweiter Betriebsmodus.

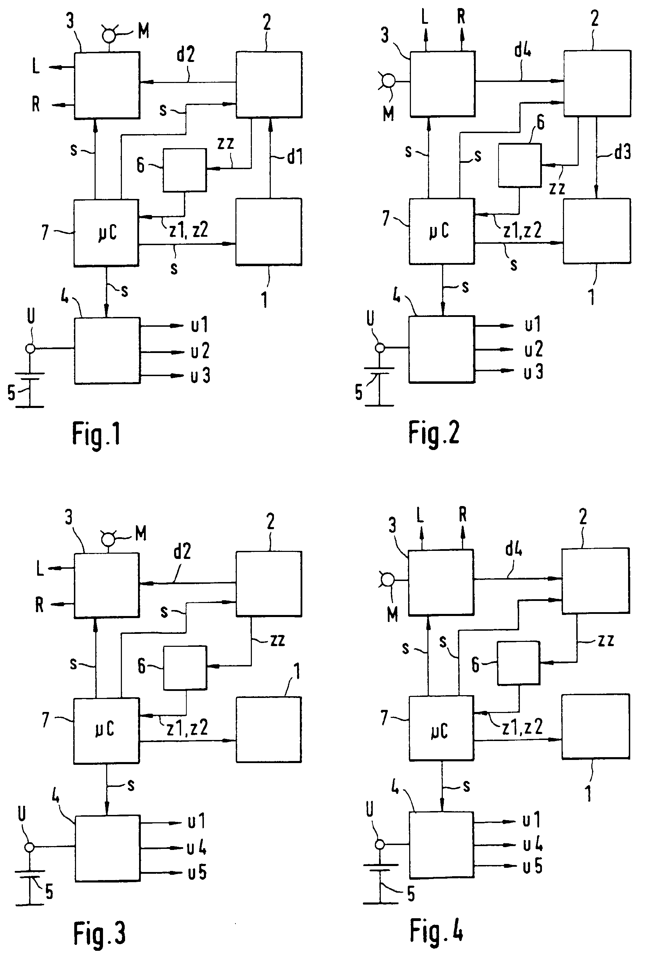

Die in Fig. 1 dargestellte Blockschaltung enthält als wesentlichen Datenspeicher einen Miniatur-Massenspeicher 1, der über einen Zwischenspeicher 2 mit einer Signalverarbeitungseinrichtung 3 verbunden ist. Zwischen diesen drei Schaltungsblöcken 1, 2, 3 findet im wesentlichen der Datenaustausch bei der Wiedergabe und Aufnahme statt. Fig. 1 stellt den Wiedergabefall dar, bei dem ein vom Miniatur-Massespeicher gelesener Datenstrom d1 letztendlich als Datenstrom d2 in der Signalverarbeitungseinrichtung 3 ankommt. Die Energieversorgung der gesamten Schaltungsanordnung erfolgt durch eine Stromversorgungseinrichtung 4, die von einem Batteriesatz 5 aus einer oder mehreren Batterien gespeist ist und geregelte Versorgungsspannungen u1, u2, u3 zum Betrieb der einzelnen Funktionseinheiten der Schaltung zur Verfügung stellt. Eine Überwachungseinrichtung 6 ist mit dem Zwischenspeicher 2 gekoppelt und überwacht dessen Ladezustand, der beispielsweise über Zwischenspeicher-Zustandssignale zz dort abgreifbar ist und ein erstes oder zweites Zustandssignal z1, z2 erzeugt, das einer Steuereinrichtung 7 zugeführt ist. Als Steuereinrichtung 7 eignet sich beispielsweise ein einfacher Mikroprozessor µc, der über Steuersignale s die jeweiligen Aktionen der einzelnen Funktionseinheiten steuert. In den dargestellten Ausführungsbeispielen von Fig. 1 bis Fig.8 handelt es sich um die Wiedergabe und/oder Aufnahme von Audiosignalen, weshalb alle Signalverarbeitungseinrichtungen 3 schematisch mit Signalausgängen für das Links- und Rechts-Signal L, R und mit einem Mikrophonanschluß M ausgestattet sind. Der Datenstrom d1 bildet einen raschen Datentransfer zwischen dem Miniatur-Massenspeicher 1 und dem Zwischenspeicher 2.

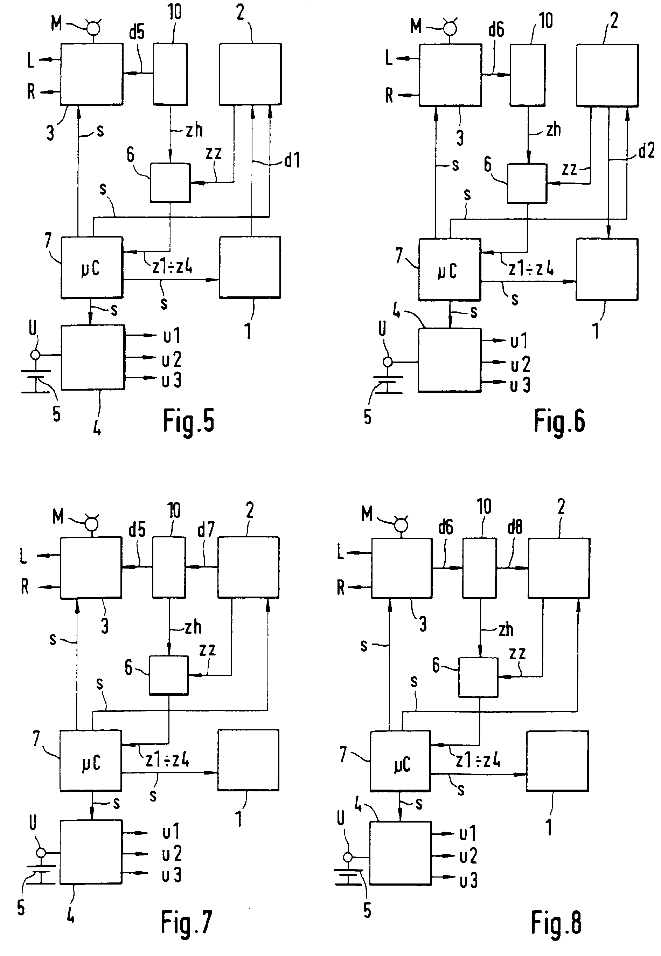

Die Fig. 1 stellt einen Betriebszustand dar, der dem ersten Betriebsmodus entspricht, in dem die stromintensiven Funktionsabläufe stattfinden. Der relativ langsame Datenstrom d2 zur Signalverarbeitungseinrichtung 3 darf während des ersten Betriebsmodus nicht unterbrochen werden. Der dargestellte Zwischenspeicher 2 erfüllt somit während des ersten Betriebsmodus zwei Funktionen gleichzeitig, einmal wird er rasch durch den Miniatur-Massenspeicher 1 nachgeladen und zum zweiten liefert er einen langsamen aber kontinuierlichen Datenstrom d2 an die Signalverarbeitungseinrichtung 3. Ein Ausführungsbeispiel der Schaltungsanordnung, das diese Doppelfunktion des Zwischenspeichers 2 vermeidet, zeigen die schematischen ist in den schematischen Schaltungsdarstellungen von Fig. 5 bis Fig. 8. Entsprechend Fig. 1 wird der erste Betriebsmodus spätestens dann ausgelöst, wenn ein Zwischenspeicher-Zustandssignal zz anzeigt, daß der Zwischenspeicher 2 durch den Datenstrom d2 relativ leer geworden ist und rasch durch einen neuen Datenstrom d1 nachgeladen werden muß. Das Ende des ersten Betriebsmodus, also das Ende der raschen Nachladung des Zwischenspeichers 2 und damit der Beginn des zweiten Betriebsmodus, wird durch ein anderes Zwischenspeicher-Zustandssignal zz angezeigt, das dann erfolgt, wenn der Zwischenspeicher 2 schon relativ voll geworden ist, so daß ein weiterer Datenstrom d1 nicht mehr aufgenommen werden kann. Die zugehörigen Zwischenspeicher-Zustandssignale zz werden im folgenden vereinfacht als Leer- und Voll-Signal bezeichnet. Das Leer-Signal beschreibt dabei einen Ladezustand des Zwischenspeichers 2, der bei dessen Auslösung mindestens noch so viele Daten enthält, daß während der gesamten Zeit des ersten Betriebsmodus der langsame Datenstrom d2 aufrechterhalten werden kann. Die Abgabe des Voll-Signals in Abhängigkeit von dem Füllungsgrad des Zwischenspeichers 2 ist weniger kritisch, natürlich dürfen bis zur Unterbrechung des ersten Datenstromes d1 keine Daten verloren gehen.

In Fig. 2 ist die gleiche Schaltungskonfiguration wie in Fig. 1 dargestellt, jedoch für den Aufnahmebetrieb. Die Schaltung dient hier beispielsweise einem Diktiergerät, das Sprachsignale am Mikrofoneingang M aufnimmt und als Daten letztendlich auf den Miniatur-Massenspeicher 1 lädt. Vom intermittierenden Betrieb zeigt Fig. 2 den Zustand des ersten Betriebsmodus, bei dem das stromintensive Speichern eines dritten Datenstromes d3 im Miniatur-Massenspeicher 1 erfolgt. Da der von der Signalverarbeitungseinrichtung 3 gebildete vierte Datenstrom d4 deutlich langsamer ist als die mögliche Schreibgeschwindigkeit des Miniatur-Massenspeichers 1, kann der Datenstand 4 im Zwischenspeicher 2 so lange gepuffert werden, bis die Überwachungseinrichtung 6 über ein Voll-Signal zz erkennt, daß der Zwischenspeicher 2 voll ist und darauf hin das zweite Zustandssignal z2 an die Steuereinrichtung 7 sendet und damit den ersten Betriebsmodus auslöst, bei dem der Zwischenspeicher 2 rasch seine Daten an den Miniatur-Massenspeicher 1 abgibt. Das Voll-Signal zz muß dabei so rechtzeitig ausgelöst werden, daß im Zwischenspeicher 2 für den langsamen Datenstrom d4 während des gesamten ersten Betriebsmodus noch genügend freie Speicherfläche vorhanden ist. Der erste Betriebsmodus wird durch ein Leer-Signal zz aus dem Zwischenspeicher 2 beendet, das mittels der Überwachungseinrichtung 6 das zweite Zustandssignal z2 erzeugt, das die entsprechenden Steuervorgänge in der Steuereinrichtung 7 auslöst. Das Ende des ersten Betriebsmodus ist der Beginn des zweiten Betriebsmodus.

In Fig. 3 ist für den Wiedergabebetrieb der zweite Betriebsmodus dargestellt. Der Miniatur-Massespeicher 1 ist mittels eines Steuersignals s in einen Stromsparbetrieb geschaltet. Es findet nur der langsame Datentransfer über den Datenstrom d2 statt. Der schnelle Datentransfer über den Datenstrom dl findet nicht statt. Es kann zweckmäßig sein, daß sich im Stromsparbetrieb auch ein Teil der geregelten Versorgungsspannungen u1, u2, u3 ändern. In Fig. 3 ist dies schematisch durch die neue Versorgungsspannung u5 dargestellt. Typische Versorgungsspannungen für die einzelnen Funktionseinheiten, die teilweise auch monolithisch auf einem Chip integriert sein können, sind für den Miniatur-Massenspeicher 1 beispielsweise 3,3 V bei einer Stromaufnahme von 300 Milliampere im ersten Betriebsmodus. Im Stromsparbetrieb kann die Versorgungsspannung erniedrigt oder abgeschaltet werden. Sinnvoller ist es jedoch, wenn durch die Steuersignale s nur eine interne Abschaltung der Hauptstromverbraucher erfolgt und über eine aktive Bereitschaftsschaltung jederzeit eine rasche Inbetriebnahme möglich ist. Der Zwischenspeicher 2 benötigt als "Flash"-Speicher eine Versorgungsspannung von mindestens 2,7 V und höher. Obwohl in der Regel die Signalverarbeitungseinrichtung 3 die Überwachungseinrichtung 6 und die Steuereinrichtung 7 mit der gleichen Technologie hergestellt sind, können ihre Versorgungsspannungen unterschiedlich sein, auch wenn sich ein Teil dieser Funktionseinheiten auf einem gemeinsamen Chip befindet. Beispielsweise kann ein Analog-Digitalumsetzer zur Erzielung der gewünschten Auflösung durchaus eine höhere Versorgungsspannung erfordern. Bei der üblicherweise verwendeten CMOS-Herstellungstechnologie ist die Stromaufnahme stark von der Versorgungsspannung abhängig, so daß zur Stromreduktion die Schaltungen möglichst im unteren Spannungsbereich betrieben werden. Das können Versorgungsspannungen zwischen 2 V und 3,3 V sein. Diese Versorgungsspannungen werden von der ebenfalls mitintegrierbaren Stromversorgungseinrichtung 4 aus der zugeführten Batteriespannung U erzeugt. Werden in dem zugehörigen Batteriesatz nur eine oder zwei Spannungszellen verwendet, dann ist die resultierende Batteriespannung U mit 1,5 V oder 3 V zu gering, so daß in der Stromversorgungseinrichtung 4 eine Spannungserhöhung stattfinden muß. Die erforderlichen Takteinrichtungen sind im Zusammenhang mit der digitalen Signalverarbeitung der Schaltung vorhanden, jedoch der besseren Übersicht wegen nicht dargestellt.

Der Übergang vom ersten Betriebsmodus in den zweiten Betriebsmodus wird durch das zweite Zustandssignal z2 ausgelöst, das einem Voll-Signal zz aus dem Zwischenspeicher 2 entspricht. Dem gegenüber wird der zweite Betriebsmodus beendet, wenn das erste Zustandssignal z1 ausgelöst wird, das dem Leer-Signal zz aus dem Zwischenspeicher 2 entspricht. Damit haben wir wieder den ersten Betriebszustand erreicht, vgl. Fig. 1

In Fig. 4 ist der Aufnahmebetrieb im zweiten Betriebszustand dargestellt, bei dem der langsame, Datenstrom d4 aus der Signalverarbeitungseinrichtung 3 zum Zwischenspeicher 2 gerichtet ist. Der Miniatur-Massenspeicher 1 befindet sich im Stromsparbetrieb und bekommt somit keine Daten zugeführt. Beim Aufnahmebetrieb wird der zweite Betriebsmodus durch das erste Zustandssignal zl eingeleitet, das dem Leer-Signal zz aus dem Zwischenspeicher 2 entspricht. Der zweite Betriebszustand wird durch das zweite Zustandssignal z2 beendet, das dem Voll-Signal zz aus dem Zwischenseicher 2 entspricht.

Die Fig. 5 bis 8 entsprechen in der Anordnung den Fig. 1 bis 4. Sie unterscheiden sich von diesen jedoch durch das Vorhandensein eines Hilfs-Zwischenspeichers 10 zwischen dem Zwischenspeicher 2 und der Signalverarbeitungseinrichtung 3. Der Hilfs-Zwischenspeicher ermöglicht, daß der Zwischenspeicher 2 vereinfacht als Eintorspeicher ausgebildet sein kann, über dessen einziges Tor entweder der Zwischenspeicher geschrieben oder gelesen wird. Ein gleichzeitiges Lesen und Schreiben wird so vermieden ebenso ein gleichzeitiges Ablaufen von schnellen und langsamen Vorgängen, wie dies in den dargestellten Betriebszuständen von Fig.1 und Fig.2 erforderlich ist. Durch die zeitliche Entkopplung der einzelnen Funktionen ist die erforderliche Organisation und Steuerung des Zwischenspeichers 2 viel einfacher. Der Hilfs-Zwischenspeicher 10 ist beispielsweise ein FIFO-Speicher (= First In First Out), der mit der Signalverarbeitungseinrichtung 3 oder mit der Steuereinrichtung 7 monolithisch integrierbar ist. Die erforderliche Kapazität des Hilfs-Zwischenspeichers 10 muß nur so groß sein, daß ein langsamer, jedoch gleichförmiger Datenstrom d5 bzw. d6 zur bzw. von der Signalverarbeitungseinrichtung 3 während der Dauer des ersten Betriebsmodus aufrechterhalten werden kann. Dies entspricht den Darstellungen von Fig. 5 und Fig. 6. Der Datenstrom d5 ersetzt dabei den Datenstrom d2 von Fig. 1 und der Datenstrom d7 den Datenstrom d4 von Fig. 2.

In Fig. 7 und 8, die dem zweiten Betriebsmodus entsprechen, ist der Datentransfer über den Hilfs-Zwischenspeicher 10 beim Wiedergabebetrieb bzw. beim Aufnahmebetrieb dargestellt. In Fig. 7 wird der Hilfs-Zwischenspeicher 10 durch den Datenstrom d5 entladen und durch einen Datenstrom d7 aus dem Zwischenspeicher 2 aufgeladen. Wenn beide Datenströme d5, d7 nicht synchronisiert sind, dann sorgt ein Hilfs-Zwischenspeicher-Zustandssignal zh dafür, daß über ein drittes oder viertes Zustandssignal z3, z4 der Überwachungseinrichtung 6 der Datentransfer mit dem Zwischenspeicher 2 angehalten oder aktiviert wird.

In Fig. 8, der den zweiten Betriebsmodus im Aufnahmefall zeigt, wird der Hilfs-Zwischenspeicher 10 durch den gleichförmigen Datenstrom d6 aufgeladen und durch den Datenstrom d8 entladen. Wenn beide Datenströme nicht miteinander synchronisiert sind, dann wird auch hier das Voll- bzw. Leerlaufen des Hilfs-Zwischenspeichers 10 durch die Hilfszwischenspeicher-Zustandssignale zh angezeigt, die über die Zustandssignale z3, z4 in Verbindung mit der Steuereinrichtung 7 den Zwischenspeicher 2 zur Datenübernahme veranlassen oder die Datenübernahme unterbinden.

Das schnelle Umsetzen der Daten in oder aus dem Miniatur-Massenspeicher 1 erweist sich auch von Vorteil, wenn der Zwischenspeicher 2 als eine vom Gerät trennbare Speichereinheit ausgebildet ist und über einen großen Speicherumfang verfügt. Derartige Speichereinheiten sind beispielsweise die sogenannten Speicherkarten , die wegen ihrer Schreib-und-Lesefunktion auch als Flash-RAM bezeichnet werden (RAM = Random Access Memory). Die gespeicherten Daten dieser Speicherkarten können mittels eines geeigneten Betriebsmodus unter Umgehung der Signalverarbeitungseinrichtung 3 rasch in den Miniatur-Massenspeicher 1 geladen werden. Umgekehrt können auch Daten aus dem Miniatur-Massenspeicher 1 rasch auf eine derartige Speicherkarte kopiert werden, die dann an einen Dritten weitergebbar ist. Ein langsamer Datentransfer zur oder von der Signalverarbeitungseinrichtung 3, entsprechend den direkten Datenströmen d2, d4 oder den indirekten Datenströmen d5, d6 über den Hilfs-Zwischenspeicher 10, findet dabei nicht statt. Diese Betriebsweise entspricht wegen dem raschen Datenaustausch einem vereinfachten ersten Betriebsmodus. Der Inhalt und das Format der auf diese Weise ausgetauschen Daten kann beliebiger Art sein, weil die Signalverarbeitungseinrichtung 3 nicht beteiligt ist.

## Patentansprüche

1. Schaltungsanordung für ein tragbares, netzunabhängiges Gerät zur Wiedergabe und/oder Aufnahme von Signalen, insbesondere von Audiosignalen, mit
- einem Miniatur-Massenspeicher (1), der über Datenverbindungen mit einem Zwischenspeicher (2) und einer Signalverarbeitungseinrichtung (3) verkoppelt ist,
- einer Stromversorgungseinrichtung (4), die an eine Stromquelle (5), beispielsweise eine Batterie, anschließbar ist und mindestens eine geregelte Versorgungsspannung (u1, u2, u3) zur Verfügung stellt, und
- einer Überwachungseinrichtung (6), die den Ladezustand des Zwischenspeichers (2) mittels Zustandssignalen (zz) einer Steuereinrichtung (7) anzeigt, wobei
- die Steuereinrichtung (7) in Abhängigkeit von dem jeweiligen Zustandssignal (zz) einen Stromsparbetrieb, insbesondere beim Miniatur-Massenspeicher (2), auslöst.

2. Schaltungsanordnung nach Anspruch 1, gekennzeichnet durch folgende Merkmale:
- mittels des Zustandssignals (zz) ist ein erster und ein zweiter Betriebsmodus für den Wiedergabe- und Aufnahmebetrieb ausgelöst,
- im ersten Betriebsmodus erfolgt ein rascher Datentransfer beim Wiedergabebetrieb vom Miniatur-Massenspeicher (1) in den Zwischenspeicher (2) und beim Aufnahmebetrieb vom Zwischenspeicher (2) in den Miniatur-Massenspeicher (1), und
- im ersten und zweiten Betriebsmodus erfolgt ein langsamer Datentransfer beim Wiedergabebetrieb vom Zwischenspeicher (2) zur Signalverarbeitungseinrichtung (3) oder beim Aufnahmebetrieb von der Signalverarbeitungseinrichtung (3) zum Zwischenspeicher (2).

3. Schaltungsanordnung nach Anspruch 1 oder 2, dadurch gekennzeichnet, daß zur Pufferung des mit der Signalverarbeitungseinrichtung (3) verkoppelten Datenstroms (d5, d6) zwischen die Signalverarbeitungseinrichtung (3) und den Zwischenspeicher (2) ein Hilfs-Zwischenspeicher (10) eingefügt ist, der unabhängig von der jeweiligen Art des Zwischenspeichers (2) einen kontinuierlichen Datenstrom (d5, d6) oder von der Signalverarbeitungseinrichtung (3) ermöglicht und dessen jeweiliger Ladezustand die Überwachungseinrichtung (6) mittels weiterer Zustandssignale (zh) der Steuereinrichtung (7) anzeigt.

4. Schaltungsanordnung nach Anspruch 2 oder 3, dadurch gekennzeichnet, daß ein erstes Zustandssignal, (zl) das einen relativ leeren Zwischenspeicher (2) anzeigt, beim Wiedergabebetrieb den Wechsel vom zweiten Betriebsmodus in den ersten Betriebsmodus auslöst.

5. Schaltungsanordnung nach Anspruch 2 oder 3, dadurch gekennzeichnet, daß ein zweites Zustandssignal, das einen relativ vollen Zwischenspeicher anzeigt, beim Aufnahmebetrieb den Wechsel vom zweiten Betriebsmodus in den ersten Betriebsmodus auslöst.

6. Schaltungsanordnung nach Anspruch 4 und 5, dadurch gekennzeichnet, daß der Wechsel vom ersten in den zweiten Betriebsmodus beim Wiedergabebetrieb durch das zweite Zustandssignal (z2) und beim Aufnahmebetrieb durch das erste Zustandssignal (z1) ausgelöst ist.

7. Schaltungsanordnung nach einem der Ansprüche 3 bis 6, gekennzeichnet durch folgende Merkmale:
- beim Wiedergabebetrieb unterbricht ein drittes Zustandssignal (z3), das einen relativ vollen Hilfs-Zwischenspeicher (10) anzeigt, den Datentransfer vom Zwischenspeicher (2) zum Hilfs-Zwischenspeicher (10),
- beim Wiedergabebetrieb aktiviert ein viertes Zustandssignal (z4), das einen relativ leeren Hilfs-Zwischenspeicher (10) anzeigt, den Datentransfer vom Zwischenspeicher (2) zum Hilfs-Zwischenspeicher (10),
- beim Aufnahmebetrieb aktiviert das dritte Zustandssignal (z3) den Datentransfer vom Hilfs-Zwischenspeicher (10) zum Zwischenspeicher (2) und
- beim Aufnahmebetrieb unterbricht das vierte Zustandssignal (z4) den Datentransfer vom Hilfs-Zwischenspeicher (10) zum Zwischenspeicher (2).

8. Schaltungsanordnung nach einem der Ansprüche 1 bis 7, dadurch gekennzeichnet, daß der Zwischenspeicher (2) eine vom Gerät trennbare Speichereinheit, insbesondere ein als Speicherkarte bezeichnetes Flash-RAM, ist.

9. Schaltungsanordnung nach Anspruch 8, dadurch gekennzeichnet, daß zur Übernahme der Information von der trennbaren Speichereinheit (2) in den Miniatur-Massenspeicher (1) oder von dem Miniatur-Massenspeicher (1) in die trennbare Speichereinheit (2) ein modifizierter erster Betriebsmodus einstellbar ist, der einen raschen Datentransfer von der trennbaren Speichereinheit (2) zum Miniatur-Massenspeicher (1) bzw. vom Miniatur-Massenspeicher (1) zur trennbaren Speichereinheit (2) auslöst, jedoch keinen langsamen Datentransfer in Richtung von oder zur Signalverarbeitungseinrichtung (3) aufweist.

10. Schaltungsanordnung nach einem der Ansprüche 1 bis 9, dadurch gekennzeichnet, daß die Signalverarbeitungseinrichtung (3) einen Signaleingang (M), insbesondere für analoge Audiosignale, und einen Signalausgang (L, R), insbesondere für analoge Audiosignale, aufweist.

11. Betriebsverfahren zum stromsparenden Betrieb eines tragbaren, netzunabhängigen Gerätes zur Wiedergabe und/oder Aufnahme mit langer Spieldauer, insbesondere für ein Gerät, dessen Schaltungsanordnung gemäß einem der Ansprüche 1 bis 10 eine Signalverarbeitungseinrichtung (3), einen Miniatur-Massenspeicher (1), einen zwischen die Signalverarbeitungseinrichtung (3) und den Miniatur-Massenspeicher (1) eingefügten Zwischenspeicher (2), eine Steuereinrichtung (7), eine an eine Stromquelle (5) anschließbare Stromversorgungseinrichtung (4) und eine Überwachungseinrichtung (6), die den Ladezustand des Zwischenspeichers (2) mittels Zustandsignalen (zz) der Steuereinrichtung (7) anzeigt, aufweist,
gekennzeichnet durch folgende Merkmale:
- die mit einzelnen Datenströmen (d1 bis d8) verkoppelten Funktionsabläufe bei der Wiedergabe oder bei der Aufnahme werden in einen ersten und zweiten Betriebsmodus aufgeteilt,
- im ersten Betriebsmodus finden neben der stets durchzuführenden Grundfunktion (d2, d4; d5, d6) diejenigen Funktionsabläufe (dl, d2), insbesondere das Lesen oder Schreiben von einem Massenspeicher (1), statt, die einen hohen Stromverbrauch aufweisen und zeitlich mittels Zwischenspeichern (2, 10) pufferbar sind, wobei der Ablauf dieser pufferbaren Funktionsabläufe (dl, d2) deutlich schneller zu erfolgen hat, als nach der Grundfunktion erforderlich wäre, und
- im zweiten Betriebsmodus werden die stromintensiven Funktionsabläufe (dl, d2), die im ersten Betriebsmodus gepuffert werden, in einen Stromsparbetrieb versetzt, wobei für die auch im zweiten Betriebsmodus stets durchzuführende Grundfunktion (d2, d4; d5, d6) mindestens teilweise auf die gepufferten Funktionsabläufe (dl, d2) zurückgegriffen wird.
